# EUROPEAN PATENT APPLICATION

(11) **EP 1 381 161 A2**
(43) Date of publication of application: **14.01.2004**
(21) Application number: 03011654.5
(22) Date of filing: 22.05.2003
(51) Int. Cl.: H04B 1/10, H04B 1/16

(54) **Digital broadcast receiver with noise suppressing function**

(30) Priority: 11.07.2002 JP 2002202182
(71) Applicant: Pioneer Corporation, Meguro-ku, Tokyo (JP)
(72) Inventor: Takahashi, Kazuhiko, Pioneer Corp. Kawagoe Works, Kawagoe-shi, Saitama (JP); Horigome, Fumihiko, Pioneer Corp. Kawagoe Works, Kawagoe-shi, Saitama (JP)
(74) Representative: Goddar, Heinz J., Dr.

(57) **Abstract**

A digital broadcast receiver with a noise suppressing function which can effectively suppress noise components included in a reception signal without being accompanied with an auditory uneasiness for the user. A level of noises included in the reception signal is detected, one or more of a plurality of noise suppressing circuits of different functions are properly combined in accordance with a situation of the detection, and a noise suppressing process is executed. The combination is changed step by step in accordance with the noise level. In another example, the control is made on the basis of an attenuation value of a reception field intensity.

## Description

### BACKGROUND OF THE INVENTION

### Field of the Invention

The invention relates to a digital broadcast receiver or the like with a noise suppressing function for suppressing noises included in a reception signal of digital broadcast.

### Description of the Related Art

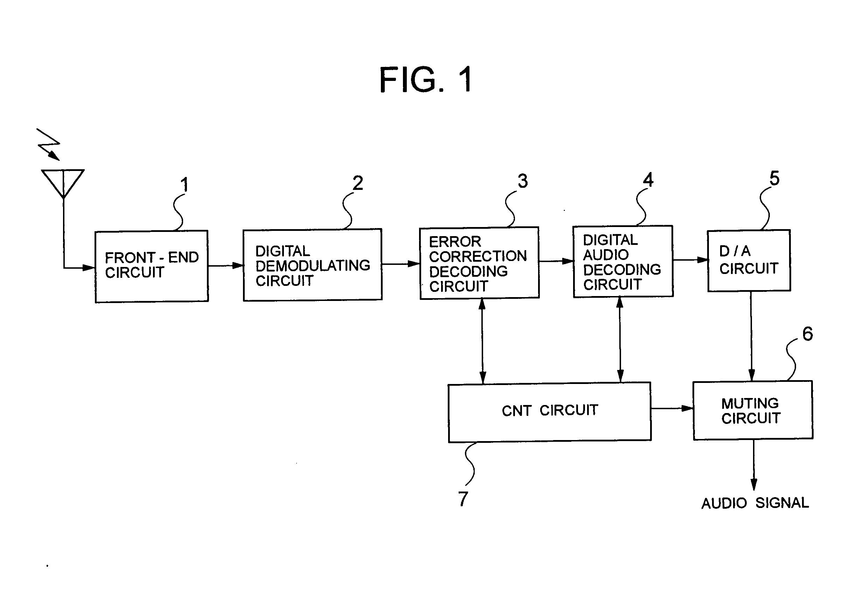

In conventional digital broadcast receivers for example, when noises are generated in a reception signal by a radio wave propagation disturbance such as weak electric field or fading, the generated noises are suppressed by an ordinary muting process in the receiver. An example of the construction of the conventional digital broadcast receiver is shown in a block diagram of Fig. 1.

The operation of the digital broadcast receiver shown in Fig. 1 will be described below.

First, a radio wave from a broadcasting station which the user has chosen to receive is converted into a predetermined digital signal via a front-end circuit 1 and a digital demodulating circuit 2 of the receiver and supplied to an error correction decoding circuit 3 and a digital audio decoding circuit 4. Predetermined error correcting process and decoding process are executed in the error correction decoding circuit 3 and the digital audio decoding circuit 4, respectively. The signal subjected to those processes is supplied to a digital/analog (D/A) converting circuit 5. An output signal from the D/A converting circuit 5 is supplied as an analog audio signal to an audio output unit (not shown) of the receiver via a muting circuit 6.

When the error correction decoding circuit 3 and the digital audio decoding circuit 4 execute the predetermined error correcting process and decoding process. The receiver includes a control circuit to which the circuits 3 and 4 supply error rates of various kinds, such as a bit error rate and the like, detected in the processing steps mentioned above. The control circuit 7 generates a mute control signal based on values of the error rates and in turn supplies it to the muting circuit 6.

When the error rate increases due to the influence of the radio wave propagation disturbance such as weak electric field or fading, the control circuit 7 generates a predetermined mute control signal which is determined from a relation between the error rate and a code rate of the receiver. The muting circuit 6 performs a muting process of a predetermined amount step by step to the analog audio signal which passes through the muting circuit in response to the mute control signal. That is, it executes a process for decreasing a sound volume of the analog audio signal step by step.

However, in the muting process described above, the audio signal level also decreases together with a noise level by the execution of the muting process, since noise components included in the reception signal and the audio signal cannot be distinguished. Therefore, if slight noises of a degree which is slightly above the ability of the error correcting process are generated, the audio signal is also suppressed at the same level as suppressing noises, This means that there is a possibility that the user listening to the broadcast program perceives unnatural feeling by the fluctuation of the sound volume. There is also a drawback such that if a degree of the muting process is suppressed in order to reduce the uneasiness about the fluctuation, an enough noise suppressing effect is not obtained.

The foregoing problem, therefore, can be mentioned as an example of problems to be solved by the invention. It is an object of the invention to provide a digital broadcast receiver in which a high noise suppressing effect can be obtained without causing unnatural feeling to an aural sense of the user.

### SUMMARY OF THE INVENTION

According to the invention, there is provided a digital broadcast receiver with a noise suppressing function for suppressing noises included in a reception signal, comprising:
an error correcting means for performing an error correcting process to the reception signal and generating a correcting ratio signal indicative of a correcting ratio upon error correction;
a decoding means for decoding an output signal from the error correcting means to a digital audio signal and generating a decoding ratio signal indicative of a decoding ratio upon decoding;
a noise suppressing means for detecting noise components included in an output signal from the decoding means, generating a noise detection signal indicative of an amount of the detected noise components, and performing a noise suppressing process to the output signal from the decoding means in accordance with a noise suppression control signal; and
a control means for discriminating a deteriorating state of the reception signal on the basis of at least one of the correcting ratio signal, the decoding ratio signal, and the noise detection signal and generating the noise suppression control signal in accordance with a result of the discrimination.

### BRIEF DESCRIPTION OF THE DRAWINGS

Fig. 1 is a block diagram showing the construction of a conventional digital broadcast receiver with a noise suppressing function;
Fig. 2 is a block diagram showing the first embodiment of a digital broadcast receiver with a noise suppressing function according to the invention;
Figs. 3A to 3C are diagrams for explaining the noise removing operation in a noise canceller circuit shown in Fig. 2;
Fig. 4 is a diagram for explaining the outline of the noise suppressing operation in the receiver shown in Fig. 2;
Fig. 5 is a block diagram showing the second embodiment of a digital broadcast receiver with a noise suppressing function according to the invention; and
Fig. 6 is a diagram for explaining the outline of another noise suppressing operating process in the embodiment of the invention.

### DETAILED DESCRIPTION OF THE INVENTION

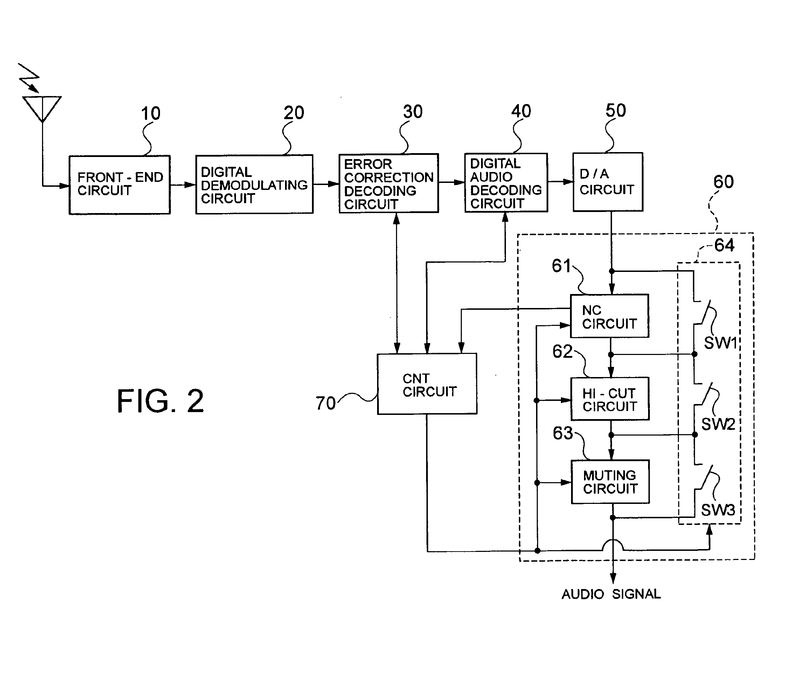

The first embodiment of a digital broadcast receiver with a noise suppressing function according to the invention is shown in a block diagram of Fig. 2.

The construction of the embodiment will be explained first.

In Fig. 2, a front-end circuit 10 is a circuit for selecting a reception signal of a desired broadcasting station from a radio wave received by an antenna and executing processes such as amplification, frequency conversion, and detection with respect to the reception signal. A digital demodulating circuit 20 is a circuit for performing a predetermined digital demodulating process to a detection output from the front-end circuit 10 so as to reproduce a digital signal multiplexed to the reception signal.

An error correction decoding circuit 30 is a circuit for performing an error correcting process to the digital signal by using, for example, a Viterbi decoder, an MPEG decoder, or the like and calculating an error correcting ratio upon error correction. A digital audio decoding circuit 40 is a circuit for decoding a digital code obtained after completion of the error correction into a digital audio signal in a predetermined format and, at the same time, calculating a decoding ratio indicative of a ratio which conforms with the predetermined format upon decoding. From each of the circuits, a control circuit 70, which will be explained later, receives the error correcting ratio and the decoding ratio as an error correcting ratio detection signal and a decoding ratio detection signal, respectively.

A digital/analog converting circuit 50 (hereinafter, simply referred to as a "D/A circuit 50") is a circuit for converting the digital audio signal generated from the digital audio decoding circuit 40 into an ordinary analog audio signal.

A noise suppressing circuit 60 comprises mainly: a noise canceller circuit 61; a high-cut circuit 62; a muting circuit 63; and a switching circuit 64.

The noise canceller circuit 61 includes therein a band pass filter having a predetermined pass band or a high pass filter, and a noise detecting unit (not shown) comprising a noise amplifier. When the noise components included in the audio signal supplied from the digital/analog converting circuit 50 are detected by using the noise detecting unit, the noise canceller circuit 61 notifies the control circuit 70, which will be explained later, of them as a noise detection signal. The noise canceller circuit 61 also has functions for performing a gate process to the audio signal in response to the noise detection signal, holding the value of the audio signal for a predetermined time, and suppressing the noise components multiplexed to the audio signal.

The high-cut circuit 62 is a circuit for cutting a high frequency band which is relatively bothersome to the ear in the frequency band of the audio signal by using a low pass filter having a predetermined pass band and suppressing noise components included in the frequency band.

The muting circuit 63 is a circuit for attenuating, step by step, the whole frequency band of the audio signal which passes through the circuit in accordance with a predetermined control signal and reducing a level of the noises included in the signal.

The switching circuit 64 is a switching circuit constructed by an analog switch using, for example, a gate device such as transistor or FET. The switching circuit 64 functions so as to properly select each of the noise canceller circuit 61, the high-cut circuit 62, and the muting circuit 63 and connect it to an output of the D/A converting circuit 50.

Various parameters such as pass band of each filter and mute control amount in each of the foregoing circuits are freely adjusted by a control signal which is supplied from the control circuit 70, which will be explained later. Similarly, it is assumed that on/off operations of switches SW1 to SW3 (hereinafter, simply referred to as SW1-SW3) in the switching circuit 64 are also controlled by a control signal which is supplied from the control circuit 70.

The control circuit 70 is constituted mainly of a microcomputer; a memory circuit such as ROM or RAM, and their peripheral circuits. The control circuit 70 is a circuit for integratedly controlling the operation of the whole receiver shown in Fig. 2.

Subsequently, the operation of the receiver shown in the block diagram of Fig. 2 will be described below.

In the diagram, the control circuit 70 monitors the error correcting ratio detection signal and the decoding ratio detection signal which are notified from the error correction decoding circuit 30 and the digital audio decoding circuit 40. That is, when noises are generated in the reception signal due to fading such as weak electric field or multiple-path, the error correcting ratio and the decoding ratio upon decoding of the reception signal fluctuate. By monitoring those detection signals, therefore, the control circuit 70 can discriminate the presence or absence of the generation of the noises in the reception signal and their generating situation. The control circuit 70 also monitors the noise detection signal which is notified from the noise canceller circuit 61.

That is, the control circuit 70 can recognize the generating situation of the noises in the reception signal by using the above three detection signals. Upon monitoring of the noise generating situation, there is no need to use all of the three detection signals. For example, the generating situation of the noises in the reception signal can be discriminated by one of those detection signals or a combination of arbitrary two of them.

As timing when the control circuit 70 monitors those detection signals, they can be monitored at predetermined time intervals in accordance with a timer (not shown) built in the control circuit, or they can be monitored only when there is a change in those detection signals, or they can be also monitored by a combination of those methods.

The control circuit 70 discriminates the generating situation of the noises in the reception signal on the basis of the detection signals and generates various control signals to the noise suppressing circuit 60 when a generation amount of the noises exceeds a predetermined threshold value Nth.

First, if it is determined that the generation amount of the noises in the reception signal is relatively small, the control circuit 70 generates a predetermined control signal to the switching circuit 64 in the noise suppressing circuit 60, thereby controlling so as to turn off the SW1 and turn on the SW2 and SW3. In the noise suppressing circuit 60, therefore, only the noise canceller circuit 61 is connected to the output of the D/A circuit 50.

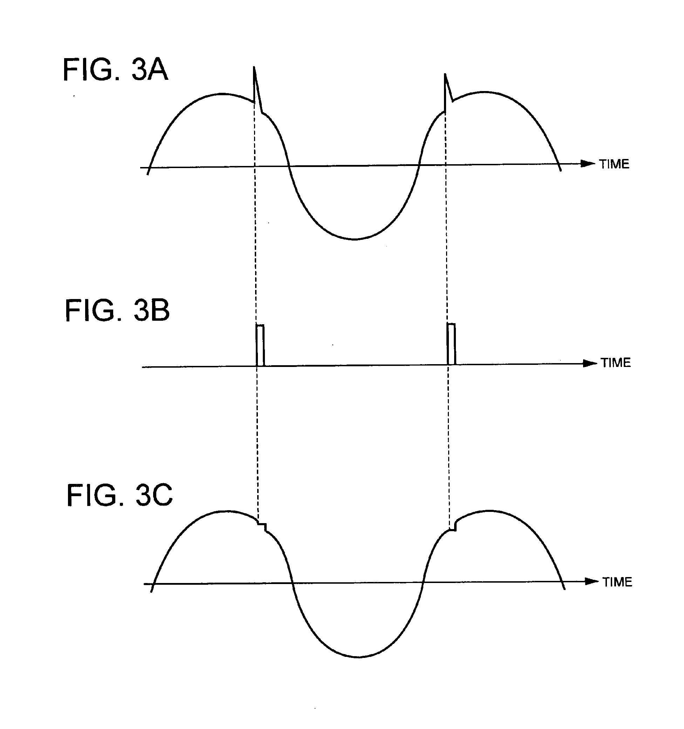

As shown in Fig. 3A, the noise canceller circuit 61 detects pulse-like noises included in the analog audio signal as an output from the D/A circuit 50 by using, for example, a high pass filter or a band pass filter having a predetermined pass band and generates a gate signal shown in Fig. 3B. The analog audio signal including the noises are delayed by, for example, an analog delay element such as low pass filter or delay line circuit in order to synchronize the timing of the analog audio signal with that of the gate signal. After that, the delayed signal is sent to a gate circuit (not shown) provided in an output unit of the noise canceller circuit 61. On/off operations of the gate circuit are controlled in response to the gate signal. A holding circuit comprising, for example, a capacitor or the like is provided on the output side of the gate circuit. As shown in Fig. 3C, therefore, the output signal from the noise canceller circuit 61 becomes the analog audio signal from which the pulse-like noises have been removed.

If it is determined that the noises in the reception signal further increased, the control circuit 70 generates a control signal to the switching circuit 64 so as to turn on the SW1 and SW3 and turn off the SW2. In the noise suppressing circuit 60, therefore, the high-cut circuit 62 is connected to the output of the D/A circuit 50 in place of the noise canceller circuit 61. This is because there is a fear that when the noises in the reception signal increase, if the noise suppressing process is continued only by the noise canceller circuit 61, a waveform of the analog audio signal itself is deformed by the gate process. Although the noise suppressing operation in the noise canceller circuit 61 is stopped in response to the control signal from the control circuit 70 as mentioned above, a microcomputer (not shown) included in the noise canceller circuit 61 can discriminate an amount of noise components detected by its own circuit and stop the noise suppressing operation by itself, or the noise suppressing operation can be also stopped by a combination of those methods.

The high-cut circuit 62 is a circuit having the function for suppressing the noise components multiplexed to the high band of the analog audio signal by using the low pass filter as mentioned above. Adjustment of a ratio of removal of the high band noises, that is, a high-cut control amount can be made by fixing a cut-off frequency of the low pass filter and adjusting an attenuation inclination degree of a high band attenuating range, or by fixing the attenuation inclination degree and adjusting the cut-off frequency. Further, the adjustment of the high-cut control amount can be made by adjusting both of them. According to any of those methods, the noise suppressing effect can be obtained by attenuating the high band components of the audio signal in accordance with the amount of noises generated in the reception signal. Naturally, the adjustment is made by the control signal from the control circuit 70.

If the radio wave propagating situation further deteriorates and the noise amount in the reception signal increases remarkably, the control circuit 70 fixes the noise suppressing control which is made by the high-cut circuit 62 and subsequently executes the noise suppressing process by using the muting circuit 63. That is, when the noise amount in the reception signal exceeds a predetermined threshold value, the control circuit 70 generates the control signal so as to turn on the SW1 and turn off the SW2 and SW3. In the noise suppressing circuit 60, thus, the high-cut circuit 62 and the muting circuit 63 are connected to the output of the D/A circuit 50.

The muting circuit 63 attenuates the audio signal including the noises which pass through the muting circuit by using a variable attenuator. It is assumed that the control circuit 70 properly determines a control amount of the variable attenuator, that is, a mute control amount in accordance with the generation amount of the noises and instructs the muting circuit 63. The mute control amount can be, therefore, changed step by step in accordance with the generation amount of the noises, or it is also possible to predetermine a function for defining a relation between the generation amount of the noises and the mute amount and continuously change the mute amount in accordance with the generation amount of the noises.

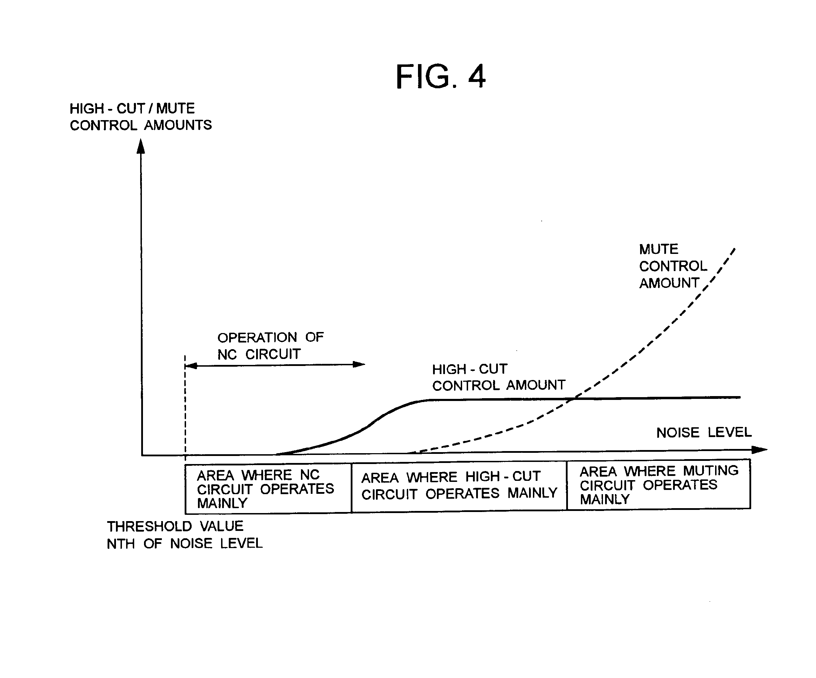

Subsequently, an outline of the noise suppressing processing operation in the embodiment described above will be explained with reference to Fig. 4. In the diagram, an axis of abscissa denotes the amount of noises included in the reception signal, that is, a noise level and an axis of ordinate indicates the noise cut control amount for the high-cut circuit 62 and the mute control amount for the muting circuit 63. A block shown under the axis of abscissa indicates a main operating area of each noise suppressing circuit corresponding to the noise level.

In the noise suppressing process shown in Fig. 4, the threshold value Nth, a first threshold value, and a second threshold value are set in accordance with the noise levels. A control is made so as to switch the noise suppressing circuit which contributes mainly to the noise suppressing process in accordance with a change in noise level. That is, a range where the noise level lies within a range from the predetermined threshold value Nth to the predetermined first threshold value becomes the main operating area of the noise canceller circuit 61 where it operates mainly. A range where the noise level lies within a range from the predetermined first threshold value to the predetermined second threshold value becomes the main operating area of the high-cut circuit 62 where it operates mainly. A range where the noise level exceeds the predetermined second threshold value becomes the main operating area of the muting circuit 63 where it operates mainly.

When the noise level increases and exceeds the predetermined threshold value Nth due to the deterioration of the radio wave propagation situation such as weak electric field or fading, therefore, the noise canceller circuit 61 operates so as to suppress the noises first. That is, the operation enters the main operating area of the noise canceller circuit 61. After that, the high-cut circuit 62 starts to operate with an increase in noise amount and the noise cut control amount by the high-cut circuit 62 gradually increases. From a point when the noise level exceeds the predetermined first threshold value, the circuit which mainly serves to suppress the noises is switched from the noise canceller circuit 61 to the high-cut circuit 62. That is, the operating range enters the main operating area of the high-cut circuit 62 where it operates mainly. When the noise level exceeds the predetermined first threshold value and increases further, the noise suppressing operation by the noise canceller circuit 61 is stopped and the muting circuit 63 starts to operate. When the high-cut amount by the high-cut circuit 62 reaches the maximum value, the mute control amount by the muting circuit 63 gradually increases. From the point when the noise level exceeds the predetermined second threshold value, the circuit mainly serves to suppress the noises is switched from the high-cut circuit 62 to the muting circuit 63. That is, the operation enters the main operating area of the muting circuit 63 where it operates mainly. When the noise amount increases further, as shown in Fig. 4, the main operating area of the muting circuit 63 continues and the mute control amount by the muting circuit increases gradually. Even if the operation enters the main operating area of the muting circuit 63, the suppressing operation of the high-cut circuit 62 is fixedly maintained and the noise cutting function by the high-cut circuit is held in an auxiliary manner. Although it is assumed that noise suppressing operation of the noise canceller circuit 61 is stopped when the noise amount increases, the operation can be also maintained in an auxiliary manner.

In the embodiment, each parameter such as error correcting ratio or decoding ratio is used as an index showing the noise amount in the description. As mentioned above, naturally, each noise suppressing circuit is not strictly limited to the area in each main operating area but can operate in each main operating area in an overlapping manner.

Further, a curve showing a high-cut control amount and a curve showing a mute control amount in Fig. 4 are shown as an example and changes of the high-cut and mute control amounts in the embodiment are not limited to the curves shown in Fig. 4.

Switching control of the switching circuit 64 in the noise suppressing process in the embodiment is not limited to the control sequence described above. For example, the control circuit 70 can supply an instruction for turning off the SW1 and SW2 and turning on the SW3 to the switching circuit 64 at a point when the noise level increases and exceeds the predetermined threshold value Nth. In the noise suppressing circuit 60, therefore, the noise canceller circuit 61 and the high-cut circuit 62 are cascade-connected to the output of the D/A circuit 50. In this case, those two circuits simultaneously start the operations and execute the noise suppressing process.

Further, the operation start order of the noise canceller circuit 61 and the high-cut circuit 62 can be replaced in accordance with use conditions or a use environment of the receiver. That is, it is assumed that the noise suppressing process in the embodiment includes every control sequence for obtaining the noise suppressing effect without giving a feeling of uneasiness to the user.

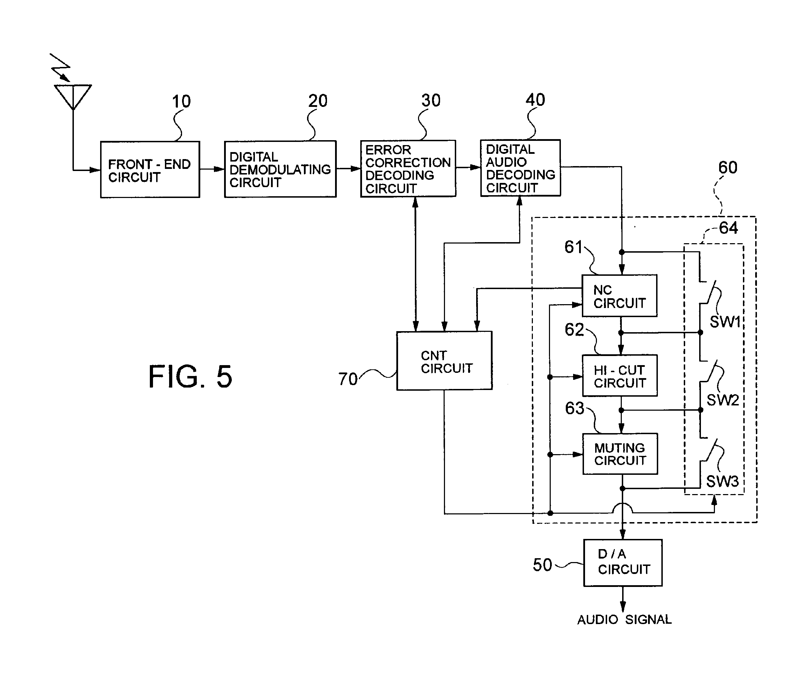

The second embodiment is shown in a block diagram of Fig. 5 with respect to the digital broadcast receiver with the noise suppressing function according to the invention.

In the second embodiment, the noise suppressing process is executed in a state where the reception signal is the digital audio signal and, after completion of the noise suppressing process, it is converted into an analog audio signal. That is, the second embodiment differs from the first embodiment with respect to only a point that the connecting order of the D/A circuit 50 and the noise suppressing circuit 60 is opposite to that in the first embodiment. Fundamental construction and operation of other portions are similar to those in the first embodiment.

By using the construction shown in the second embodiment, the series of operation in each of the noise suppressing circuits can be executed by a digital signal process by using, for example, a DSP (Digital Signal Processor). Analog circuits such as various filters and gate circuits are, thus, unnecessary and the whole receiver can be miniaturized.

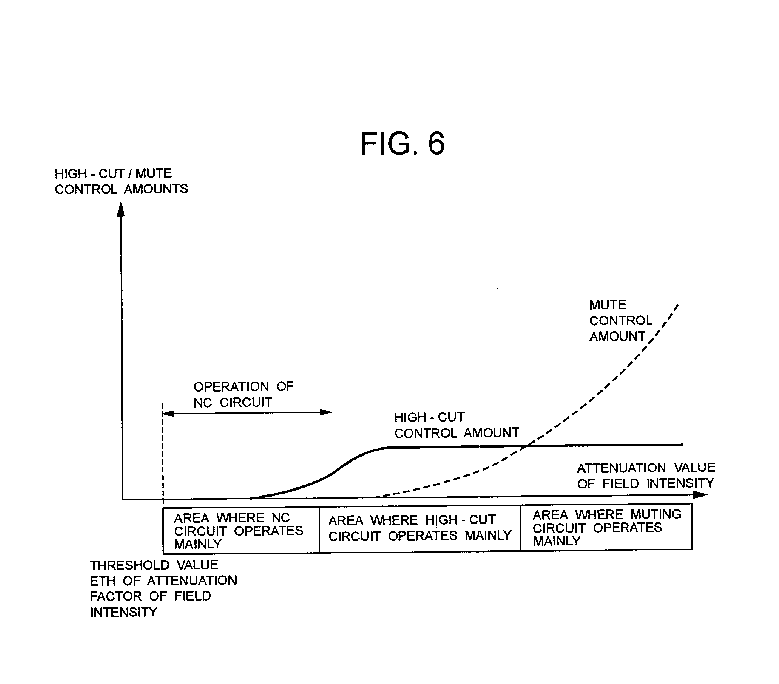

Although the construction in which the control circuit 70 executes the noise suppression in accordance with the noise level in the reception signal has been shown in the embodiment mentioned above, the invention is not limited to the embodiment. For example, it is also possible that the control circuit 70 obtains information regarding reception field intensity and execute the noise suppressing process in accordance with the attenuation of the reception field intensity as shown in Fig. 6. In this case, it is assumed that an attenuation factor of the reception field intensity in place of the noise level is used as a variable and the noise suppressing circuit which is made operative is switched each time the variable changes in excess of various threshold values.

In the noise suppressing process shown in Fig. 6, a threshold value Eth, a first threshold value, and a second threshold value are set in accordance with a change in attenuation factor of the reception field intensity in association with deterioration of a radio wave propagation situation such as weak electric field or fading. Control is made so that the noise suppressing circuit which contributes mainly to the noise suppressing process is switched in accordance with a magnitude of the attenuation factor. That is, an area where the attenuation factor lies within a range from the predetermined threshold value Nth to the predetermined first threshold value enters the main operating area of the noise canceller circuit 61 where it operates mainly. An area where the attenuation factor lies within a range from the predetermined first threshold value to the predetermined second threshold value enters the main operating area of the high-cut circuit 62 where it operates mainly. An area where the attenuation factor exceeds the predetermined second threshold value enters the main operating area of the muting circuit 63 where it operates mainly.

When the attenuation factor of the reception field intensity increases and exceeds the predetermined threshold value Eth in association with the deterioration of the radio wave propagation situation such as weak electric field or fading, therefore, first, the noise canceller circuit 61 operates for noise suppression. That is, the operation enters the main operating area of the noise canceller circuit 61. After that, as the attenuation factor increases, the high-cut circuit 62 starts to operate, and the noise-cut control amount by the high-cut circuit 62 increases gradually. Around the point when the attenuation factor exceeds the predetermined first threshold value, the circuit which mainly serves to suppress the noises is switched from the noise canceller circuit 61 to the high-cut circuit 62. That is, the operation enters the main operating area of the high-cut circuit 62 where it operates mainly. When the attenuation factor exceeds the predetermined first threshold value and increases further, the noise suppressing operation by the noise canceller circuit 61 is stopped and the muting circuit 63 starts to operate. When a high-cut amount by the high-cut circuit 62 reaches the maximum value, the mute control amount by the muting circuit 63 increases gradually. Around the point when the attenuation factor exceeds the predetermined second threshold value, the circuit which mainly serves to suppress the noises is switched from the high-cut circuit 62 to the muting circuit 63. That is, the operation enters the main operating area of the muting circuit 63 where it operates mainly. When the attenuation factor increases further, as shown in Fig. 6, the main operating area of the muting circuit 63 continues and the mute control amount by the muting circuit 63 increases gradually. Even when the operation enters the main operating area of the muting circuit 63, the suppressing operation of the high-cut circuit 62 is fixedly maintained and its noise-cut function is held in an auxiliary manner. Although the noise suppressing operation by the noise canceller circuit 61 is stopped when the noise amount increases, it can be also maintained in an auxiliary manner.

In the embodiment, each parameter such as error correcting ratio or decoding ratio is used as an index showing the attenuation factor of the reception field intensity in the description.

Each noise suppressing circuit is not strictly limited to each main operating area as shown in Fig. 6 but, naturally, it can operate in each area in an overlapping manner. The pattern of the control amount curve of each noise suppressing circuit and that of the control procedure are not limited to those described in Fig. 6.

Further, the noise suppressing control can be also made on the basis of two input conditions of the noise level in the reception signal and the attenuation factor of the reception field intensity.

As described in detail above, according to the embodiment of the invention, there is provided the digital broadcast receiver with the noise suppressing function for suppressing noises included in the reception signal, comprising: the error correcting means for performing the error correcting process to the reception signal and generating the correcting ratio signal indicative of the correcting ratio upon error correction; the decoding means for decoding the output signal from the error correcting means to the digital audio signal and generating the decoding ratio signal indicative of the decoding ratio upon decoding; the noise suppressing means for detecting the noise components included in the output signal from the decoding means, generating the noise detection signal indicative of the amount of the detected noise components, and performing the noise suppressing process to the output signal from the decoding means in accordance with the noise suppression control signal; and the control means for discriminating the deteriorating state of the reception signal on the basis of at least one of the correcting ratio signal, the decoding ratio signal, and the noise detection signal and generating the noise suppression control signal in accordance with the result of the discrimination.

In the digital broadcast receiver with the noise suppressing function, the noise components included in the reception signal can be effectively suppressed without being accompanied with the auditory uneasiness for the user.

The features disclosed in the foregoing description, in the claims and/or in the accompanying drawings may, both separately and in any combination thereof, be material for realising the invention in diverse forms thereof.

## Claims

1. A digital broadcast receiver with a noise suppressing function for suppressing noises included in a reception signal, comprising:
an error correcting means for performing an error correcting process to the reception signal and generating a correcting ratio signal indicative of a correcting ratio upon error correction;
a decoding means for decoding an output signal from said error correcting means to a digital audio signal and generating a decoding ratio signal indicative of a decoding ratio upon decoding;
a noise suppressing means for detecting noise components included in an output signal from said decoding means, generating a noise detection signal indicative of an amount of the detected noise components, and performing a noise suppressing process to the output signal from said decoding means in accordance with a noise suppression control signal; and
a control means for discriminating a deteriorating state of said reception signal on the basis of at least one of said correcting ratio signal, said decoding ratio signal, and said noise detection signal and generating said noise suppression control signal in accordance with a result of the discrimination.

2. A receiver according to claim 1, wherein said noise suppressing means includes:
at least one of noise suppressing circuits such as noise canceller circuit, high-cut circuit, and muting circuit; and
a switching circuit for selecting at least one of said noise suppressing circuits in accordance with said noise suppression control signal and connecting it to an output of said decoding means.

3. A receiver according to claim 2, wherein said control means generates said noise suppression control signal for making control to sequentially select each of said noise suppressing circuits in accordance with said discrimination result.

4. A receiver according to claim 2, wherein when said switching circuit selects two or more of said noise suppressing circuits in accordance with said noise suppression control signal, it cascade-connects them to the output of said decoding means.

5. A receiver according to claim 2, wherein said noise canceller circuit generates said noise detection signal, performs a gate process according to said noise suppression control signal to the output signal from said decoding means, and suppresses the noise components included in said output signal.

6. A receiver according to claim 2, wherein said high-cut circuit attenuates a signal in a high frequency band in the output signal from said decoding means in accordance with said noise suppression control signal, thereby suppressing the noise components included in said output signal.

7. A receiver according to claim 2, wherein said muting circuit attenuates the output signal from said decoding means in accordance with said noise suppression control signal, thereby suppressing the noise components included in said output signal.

8. A receiver according to claim 1 or claim 2, further comprising a digital/analog converter, and
wherein an output of said decoding means is connected to an input of said noise suppressing means via said digital/analog converter.

9. A receiver according to claim 1 or claim 2, further comprising a digital/analog converter, and
wherein an output signal from said noise suppressing means is generated via said digital/analog converter.

10. A digital broadcast receiver comprising:
a receiving means for receiving a reception signal;
a correcting means for making an error correction to said reception signal and calculating a correcting ratio in the error correction;
a suppressing means for suppressing noises included in said reception signal; and
a control means for generating a control signal to control said suppressor in accordance with a magnitude of said correcting ratio,
wherein said suppressing means has a noise canceller circuit, a high-cut circuit, a muting circuit, and a selecting circuit for selectively making said circuits operative in accordance with said control signal.

11. A receiver according to claim 12, wherein said control means generates the control signal for setting a main operating area in a manner such that when the magnitude of said correcting ratio is equal to or less than a first threshold value, the main operating area of said noise canceller circuit is set, when the magnitude of said correcting ratio exceeds said first threshold value and is equal to or less than a second threshold value, the main operating area of said high-cut circuit is set, and when the magnitude of said correcting ratio exceeds said second threshold value, the main operating area of said muting circuit is set, respectively.

12. A digital broadcast receiver comprising:
a receiving means for receiving a reception signal;
a decoding means for decoding said reception signal into a digital signal and calculating a decoding ratio upon decoding;
a suppressing means for suppressing noises included in said reception signal; and
a control means for generating a control signal to control said suppressor in accordance with a magnitude of said decoding ratio,
wherein said suppressing has a noise canceller circuit, a high-cut circuit, a muting circuit, and a selecting circuit for selectively making said circuits operative in accordance with said control signal.

13. A receiver according to claim 14, wherein said control means generates the control signal for setting a main operating area in a manner such that when the magnitude of said decoding ratio is equal to or less than a first threshold value, the main operating area of said noise canceller circuit is set, when the magnitude of said decoding ratio exceeds said first threshold value and is equal to or less than a second threshold value, the main operating area of said high-cut circuit is set, and when the magnitude of said decoding ratio exceeds said second threshold value, the main operating area of said muting circuit is set, respectively.

14. A digital broadcast receiver comprising:
a receiving means for receiving a reception signal;
a detecting means for detecting noise components included in said reception signal and an amount of said noise components upon detection;
a suppressing means for suppressing the noises included in said reception signal; and
a control means for generating a control signal to control said suppressor in accordance with the amount of said noise components,
wherein said suppressing means has a noise canceller circuit, a high-cut circuit, a muting circuit, and a selecting circuit for selectively making said circuits operative in accordance with said control signal.

15. A receiver according to claim 16, wherein said control means generates the control signal for setting a main operating area in a manner such that when the amount of said noise components is equal to or less than a first threshold value, the main operating area of said noise canceller circuit is set, when the amount of said noise components exceeds said first threshold value and is equal to or less than a second threshold value, the main operating area of said high-cut circuit is set, and when the amount of said noise components exceeds said second threshold value, the main operating area of said muting circuit is set, respectively.

16. A digital broadcast receiver comprising:
a receiving means for receiving a reception signal;
a measuring means for measuring an electric field intensity of said reception signal and calculating an attenuation factor of said electric field intensity;
a suppressing means for suppressing noises included in said reception signal; and
a control means for generating a control signal to control said suppressor in accordance with a magnitude of said attenuation factor,
wherein said suppressing means has a noise canceller circuit, a high-cut circuit, a muting circuit, and a selecting circuit for selectively making said circuits operative in accordance with said control signal.

17. A receiver according to claim 18, wherein said control means generates the control signal for setting a main operating area in a manner such that when the magnitude of said attenuation factor is equal to or less than a first threshold value, the main operating area of said noise canceller circuit is set, when the magnitude of said attenuation factor exceeds said first threshold value and is equal to or less than a second threshold value, the main operating area of said high-cut circuit is set, and when the magnitude of said attenuation factor exceeds said second threshold value, the main operating area of said muting circuit is set, respectively.

18. A noise suppressing method in a digital broadcast receiver, comprising:
a first step of receiving a reception signal;
a second step of making an error correction to said reception signal and detecting a correcting ratio upon error correction; and
a third step of making at least one of a noise canceller circuit, a high-cut circuit, and a muting circuit operative and suppressing noises included in said reception signal,
wherein in said third step, control for setting a main operating area is made in a manner such that when a magnitude of said correcting ratio is equal to or less than a first threshold value, the main operating area of said noise canceller circuit is set, when the magnitude of said correcting ratio exceeds said first threshold value and is equal to or less than a second threshold value, the main operating area of said high-cut circuit is set, and when the magnitude of said correcting ratio exceeds said second threshold value, the main operating area of said muting circuit is set, respectively.

19. A noise suppressing method in a digital broadcast receiver, comprising:
a first step of receiving a reception signal;
a second step of decoding said reception signal into a digital signal and detecting a decoding ratio upon decoding; and
a third step of making at least one of a noise canceller circuit, a high-cut circuit, and a muting circuit operative and suppressing noises included in said reception signal,
wherein in said third step, control for setting a main operating area is made in a manner such that when a magnitude of said decoding ratio is equal to or less than a first threshold value, the main operating area of said noise canceller circuit is set, when the magnitude of said decoding ratio exceeds said first threshold value and is equal to or less than a second threshold value, the main operating area of said high-cut circuit is set, and when the magnitude of said decoding ratio exceeds said second threshold value, the main operating area of said muting circuit is set, respectively.

20. A noise suppressing method in a digital broadcast receiver, comprising:
a first step of receiving a reception signal;
a second step of detecting an amount of noise components included in said reception signal; and
a third step of making at least one of a noise canceller circuit, a high-cut circuit, and a muting circuit operative and suppressing the noises included in said reception signal,
wherein in said third step, control for setting a main operating area is made in a manner such that when the amount of said noise components is equal to or less than a first threshold value, the main operating area of said noise canceller circuit is set, when the amount of said noise components exceeds said first threshold value and is equal to or less than a second threshold value, the main operating area of said high-cut circuit is set, and when the amount of said noise components exceeds said second threshold value, the main operating area of said muting circuit is set, respectively.

21. A noise suppressing method in a digital broadcast receiver, comprising:
a first step of receiving a reception signal;
a second step of measuring an attenuation factor of an electric field intensity of said reception signal; and
a third step of making at least one of a noise canceller circuit, a high-cut circuit, and a muting circuit operative and suppressing noises included in said reception signal,
wherein in said third step, control for setting a main operating area is made in a manner such that when a magnitude of said attenuation factor is equal to or less than a first threshold value, the main operating area of said noise canceller circuit is set, when the magnitude of said attenuation factor exceeds said first threshold value and is equal to or less than a second threshold value, the main operating area of said high-cut circuit is set, and when the magnitude of said attenuation factor exceeds said second threshold value, the main operating area of said muting circuit is set, respectively.
